# EUROPÄISCHE PATENTANMELDUNG

(11) **EP 1 849 923 A2**
(43) Veröffentlichungstag der Anmeldung: **31.10.2007**
(21) Anmeldenummer: 07006374.8
(22) Anmeldetag: 28.03.2007
(51) Int. Cl.: E03F 3/04

(54) **Universalverrieglungssytem für verkehrs-, vandalismus- und diebstahlsichere Verrieglung von Abdeckungen für Kanäle, Schächte und Linienentwässerungssysteme**

(30) Priorität: 28.04.2006 DE 102006019806; 06.12.2006 DE 102006057812
(71) Anmelder: MEA Polymer Beton B.V., 7020 Zelhem (NL)
(72) Erfinder: Arm, Wolfgang, 03048 Cottbus (DE)
(74) Vertreter: Wolff, Felix

(57) **Zusammenfassung**

Die vorliegende Erfindung betrifft eine Verrieglung zwischen einem Abdeckteil und einem Auflageteil, von Kanälen, Schächten sowie Linienentwässerungssystemen, wobei an dem einen Teil (26,27) eine Feder (1) und dem anderen Teil (26,27) eine Falle (2) angeordnet ist die selbsthemmend, form- und/oder kraftschlüssig miteinander verbunden sind.

## Beschreibung

Die vorliegende Erfindung betrifft eine Verrieglung zwischen einem Abdeckteil und einem Auflageteil von Kanälen, Schächten sowie Linienentwässerungssystemen.

Abdeckungen für Kanäle, Schächte und Linienentwässerungssysteme müssen heutzutage verkehrs-, vandalismus- und diebstahlsicher mit deren Auflage beispielsweise dem Schacht oder der Abdeckung verriegelt sein, um zu verhindern, dass sich die Abdeckung oder der Schacht ungewollt öffnet oder dass die Abdeckungen für Vandalismus eingesetzt werden. Des weiteren stellen derartige Abdeckungen einen erheblichen Wert dar, so dass auch sichergestellt sein muss, dass die Abdeckungen nicht gestohlen werden.

Es war deshalb die Aufgabe der vorliegenden Erfindung eine Verrieglung zwischen einem Abdeckteil und einem Auflageteil zur Verfügung zu stellen, die verkehrs-, vandalismus und diebstahlsicher ist.

Gelöst wird die Aufgabe Verbindung zwischen einem Abdeckteil und einem Auflageteil , wobei an dem einem Teil eine Feder und dem anderen Teil eine Falle angeordnet ist, die selbsthemmend sowie form- und/oder kraftschlüssig miteinander verbunden sind.

Es war für den Fachmann überaus erstaunlich und nicht zu erwarten, dass die Verrieglung zwischen dem Abdeckteil beispielsweise zwischen einer Abdeckung oder/und deren Auflage beispielsweise der Rand des Kanal oder der Abdeckung sehr einfach herzustellen ist. Die erfindungsgemäße Verriegelung hält allen im normal Betrieb auftretenden Belastungen stand und ist nur mit einem Spezialwerkzeug zu lösen, so dass sie auch vandalismus- und diebstahlsicher ist. Die erfindungsgemäße Verrieglung ist einfach und kostengünstig herzustellen. Die erfindungsgemäße Verrieglung kann einfach verriegelt und wieder gelöst werden. Bereits bestehende Kanäle, Schächte sowie Linienentwässerungssysteme können nachträglich mit der erfindungsgemäßen Verriegelung ausgerüstet werden.

Erfindungsgemäß weist die Verrieglung eine Feder und eine Falle auf, die form- und/oder kraftschlüssig miteinander verbunden sind. Diese Verbindung ist selbsthemmend d. h, sie löst sich unter den normalerweise im Betrieb beispielsweise durch den Verkehr auftretenden Kräften nicht selbsttätig. Es bedarf einer bestimmten Bewegung, wie beispielsweise einer Drehung oder einer gezielten Spreizung der Schenkel der Feder um die Feder von der Falle zu lösen. Die Feder kann sowohl an dem Abdeckteil als auch auf dem Auflageteil angeordnet sein. Die Falle ist dann jeweils an dem anderen Teil angeordnet.

Vorzugsweise ist die Feder im wesentlichen U-förmig gestaltet, wobei die Schenkel des U's im verriegelnden Zustand vorgespannt sind und form- und/oder Kraftschlüssig mit der Falle zusammenwirken.

Vorzugsweise handelt es sich bei der Verbindung zwischen der Feder und der Falle um eine Schnappverbindung. Diese Ausführungsform der vorliegenden Verrieglung hat insbesondere den Vorteil, dass der Benutzer hört und spürt, wenn die Verriegelung verriegelt ist.

Vorzugsweise ist die Verriegelung nur mit einem Spezialwerkzeug lösbar ,so dass Vandalismus- und Diebstahl verhindert werden können.

Erfindungsgemäß ist die erfindungsgemäße Verrieglung lösbar ,so dass das Abdeckteil jederzeit von dem Auflageteil beispielsweise für lnspektions- oder Reinigungszwecke abnehmbar ist. Vorzugsweise erfolgt das Lösen der Verbindung durch eine Longitudinal- und/oder Drehbewegung der Falle oder der Feder.

Vorzugsweise weist deshalb die Falle eine Form auf, die eine Drehbewegung begünstigt.

Um die Verrieglung durch eine Drehung lösen zu können, ist es vorteilhaft, wenn entweder die Falle oder die Feder drehfest mit dem Abdeckteil oder dem Auflageteil verbunden ist. Das jeweils andere Teil kann dann vorzugsweise um 90 Grad verdreht werden um die Verrieglung zu lösen.

In einer anderen bevorzugten Ausführungsform weist die erfindungsgemäße Erfindung ein Schließmittel vorzugsweise ein Schließkeil auf, mit dem die Schenkel der Feder so spannbar sind, dass sie mit der Falle nicht mehr in Eingriff stehen. Dadurch ist die erfindungsgemäße Verrieglung lösbar bzw. die Feder kann mit der Falle in Überdeckung gebracht und dann teilweise entspannt werden, sodass die Feder mit der Falle den form- und/oder kraftschlüssigen Verbund eingeht.

Vorzugsweise ist die Verrieglung mit einem Drehschließteil betätigbar; d,h. verriegel- und lösbar. Vorzugsweise ist an diesem Drehschließteil das Schließmittel angeordnet_ Weiterhin bevorzugt weist das Drehschließteil ein Bajonett auf, so dass es nicht nur Torsions- sondern auch Axialkräfte übertragen kann. Ganz besonders bevorzugt ist das Drehschließteil lediglich mit dem Spezialwerkzeug betätigbar d. h. dreh-, zieh- und/oder drückbar.

Vorzugsweise weist die Falle mindestens eine Schräge Fläche auf, die im Schließzustand an mindestens einer schrägen Fläche der Feder zumindest teilweise anliegt. Durch diese Schließwinkelgeometrie wird beispielsweise die Selbsthemmung zwischen Feder und Falle realisiert. Die Schließwinkelgeometrie wird nach dem Reibkoeffizient der Teile zueinander dimensioniert. Durch die Schrägen Flächen ist auch ein Spielausgleich zwischen der Feder und der Falle möglich.

Vorzugsweise weist die Falle Ankerzapfen auf, mit denen sie in dem Anlageteil stoff- und/oder kraftschlüssig verbindbar ist.

In einer weiter bevorzugten Ausführungsform weist die Falle einen Versenkkonus auf, in dem der Schließkeil versenkbar ist.

Im folgenden wird die Erfindung anhand der Figuren 1-36 erläutert. Diese Erläuterungen sind lediglich beispielhaft und schränken den allgemeinen Erfindungsgedanken nicht ein.
**Figur 1** zeigt die Verrieglung zwischen Feder und Falle.
**Figur 2** zeigt eine weitere Ausführungsform der Verrieglung gemäß Figur 1.
**Figur 3** zeigt die Feder
**Figur 4** zeigt die Falle in drei Ansichten.
**Figur 5** zeigt eine weitere Ausführungsform der Falle.
**Figur 6** zeigt das Drehschließteil in vier Ansichten.
**Figur 7** zeigt eine weitere Ausführungsform des Drehschließteils.
**Figur 8** zeigt das Drehschließteil mit der Feder
**Figur 9** zeigt das Drehschließteil mit der Falle.
**Figur 10** zeigt eine weitere Ausführungsform des Drehschließteils.
**Figur 11** zeigt das Werkzeug zur Betätigung des Drehschließteils.
**Figur 12** zeigt eine weitere Ausführungsform des Werkzeuges gemäß Figur 11.
**Figur 13** zeigt eine mögliche Ausführungsform der erfindungsgemäßen Verrieglung
**Figur 14** zeigt eine weitere Ausführungsform der erfindungsgemäßen Verrieglung.
**Figur 15** zeigt eine weitere Ausführungsform der erfindungsgemäßen Verrieglung.
**Figur 16** zeigt eine zusätzliche Ausführungsform der erfindungsgemäßen Verrieglung.
**Figur 17** zeigt die Falle mit Versenkkonus.
**Figur 18** zeigt die erfindungsgemäße Verrieglung im Zusammenspiel mit einer Abdeckung und deren Auflage.
**Figur 19** zeigt eine weitere Ausführungsform der Feder.
**Figur 20** zeigt die Montage der Falle an einer Rinnenauflage.
**Figur 21** zeigt eine Abdeckung mit einem Federfach.
**Figur 22** zeigt eine durch das Drehschließteil gespannte Feder.
**Figur 23** zeigt eine weitere Ausführungsform des Drehschließteils.
**Figur 24** zeigt die Selbstsicherung der erfindungsgemäßen Verrieglung.
**Figur 25** zeigt den Schlosskasten eines weiteren Verriegelungssystems.
**Figur 26** zeigt den Deckel des Schlosskastens.
**Figur 27** zeigt eine Feder, die in den Schlosskasten montiert wird.
**Figur 28** zeigt den Verrieglungsbolzen für dieses Verrieglungssytem.
**Figur 29** zeigt das Schließteil.
**Figur 30** zeig den Schlüssel für das Verrieglungssystem.
**Figur 31** zeigt die im Schlosskasten eingebaute Feder.
**Figur 32** zeigt den an den Schlosskasten montierten Deckel.
**Figur 33** zeig eine Abdeckung.
**Figur 34** zeigt die Abdeckung mit den Verrieglungsbolzen.
**Figur 35** zeigt Details des Verrieglungsbolzens und des Schließteils.
**Figur 36** zeigt die auf einer Rinne gesicherte Abdeckung.

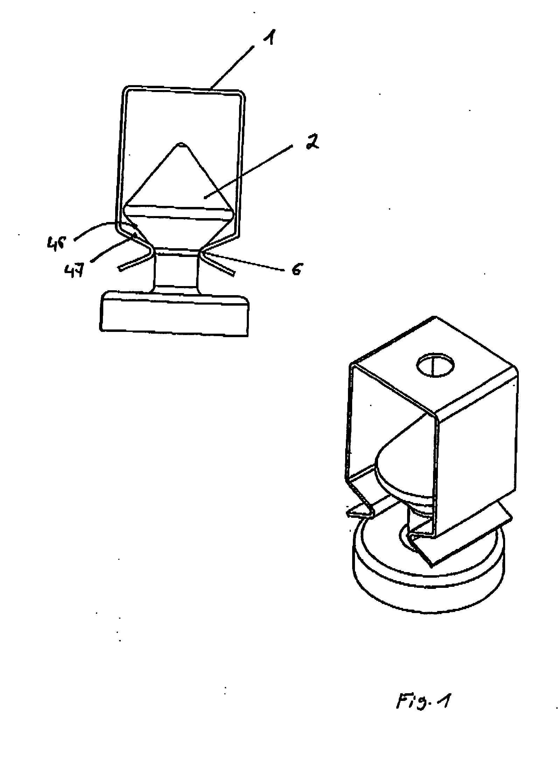

Figur 1 zeigt eine einfache Feder-Bolzen-Schnappverbindung nach dem Stand der Technik. Diese Verbindung kann sich unter den im Betrieb auftretenden Belastungen öffnen indem die Feder einfach nach oben gezogen wird. Dies ist bei den folgend beschriebenen Verriegelungen nicht möglich.

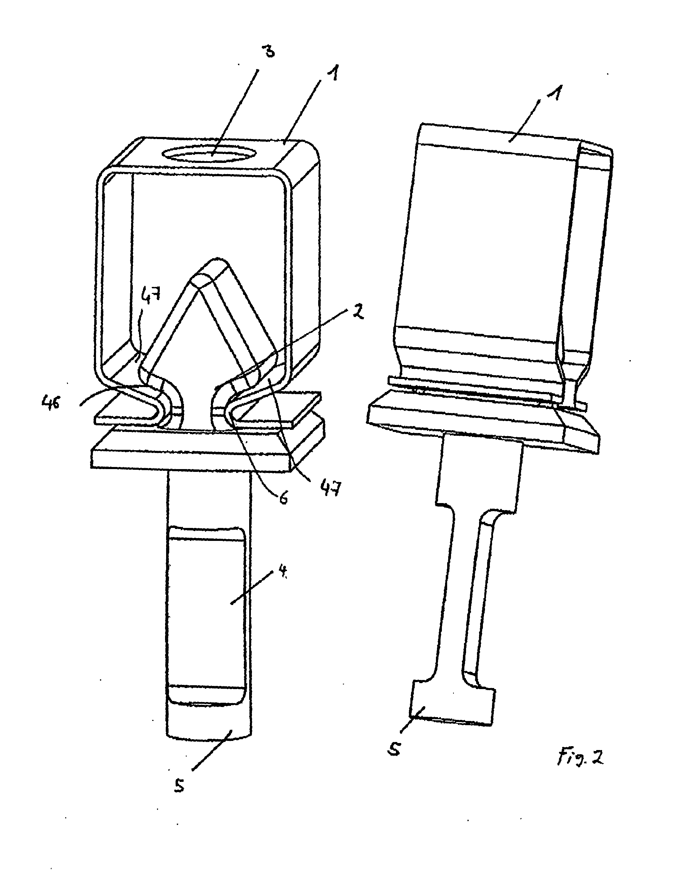

Figur 2 zeigt eine Ausführungsform der erfindungsgemäßen Verrieglung. In dem vorliegenden Fall ist die Feder im wesentlichen u-förmig gestaltet und an dem unteren Enden der Schenkel weist sie Einbuchtungen 6 auf, wodurch sich jeweils eine schräge Fläche 47 ergibt. Die beiden Schenkel der Feder sind im verriegelten Zustand vorgespannt, so dass sie mit einer gewissen Kraft an der Falle 2 anliegen. Durch die geradlinige Schräge 46 der Falle 2, die mit der schrägen Fläche 47 der Feder 1 zusammenwirkt, ergibt sich eine geradlinige selbsthemmende form- und/oder kraftschlüssige Verriegelungskontur. Die Verbindung kann nicht dadurch gelöst werden, dass die Feder einfach von der Falle 2 abgezogen wird. Es bedarf einer zusätzlichen Öffnungsbewegung (Drehung) zwischen Feder und Falle um die Feder von der Falle zu lösen. Dadurch, dass die Falle 2 an ihrem oberen Ende keil- oder kegelförmig gestaltet, ist kann sie zum Verriegeln der erfindungsgemäßen Verriegelung die Feder auseinanderbiegen. Sobald die Feder die breitestes Stelle der Falle überbrückt hat, schnappen die Schenkel zusammen und die Fläche 47 kommt mit der Stelle der Fläche 46 in Anlage, an der sich ein Kräftegleichgewicht zwischen Federkraft und Anpresskraft einstellt. Die Falle rutscht dabei immer weiter in die Feder hinein, so dass ein Spielausgleich gewährleistet ist. Indem vorliegenden Fall ist die Falle ein länglicher Keil. Des weiteren weist die Falle an ihrem unteren Ende einen Ankerzapfen 5 auf, mit dem sie fest mit der Auflagefläche beispielsweise der Rinne oder mit deren Abdeckung verbunden werden kann. Um eine drehfeste Verbindung zu erzielen, weist der Ankerzapfen Befestigungsmittel 4 auf, die beispielsweise umgossen werden können, um so eine form- und kraftschlüssige Verbindung zu erzielen. Diese erfindungsgemäße Verrieglung und lässt sich nur dadurch lösen, dass bei drehfest eingebauter Falle die Feder um 90 Grad gedreht wird. In dieser Stellung lässt sich die Feder dann leicht von der Falle abziehen. Auf diese Weise kann die Verrieglung zwischen der Falle und der Feder erfolgen. Um die Drehung der Falle in der Feder oder der Feder relativ zur Falle zu Erleichtern weist die Falle an ihrem Hals, an dem letztendlich auch die Feder anliegt eine im wesentlichen elipsoide Form auf. Da das Elipsoid an zwei Seiten abgeflacht ist, schnappt die Feder in die geöffnete Position ein. An ihrem oberen Ende weist die Feder eine Öffnung 3 auf, mit der sie an dem jeweiligen Bauteil verbindbar ist.

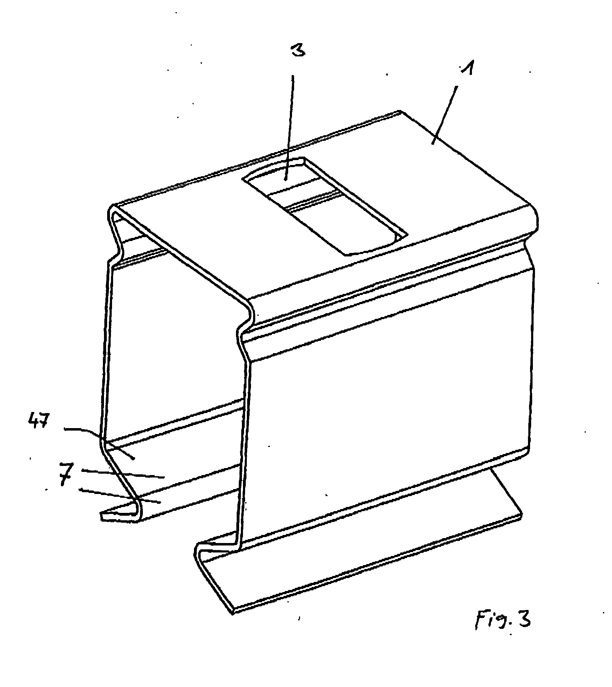

Figur 3 zeigt eine weitere Ausführungsform der Feder. In dem vorliegenden Fall ist die Öffnung 3 als Langloch ausgeführt.

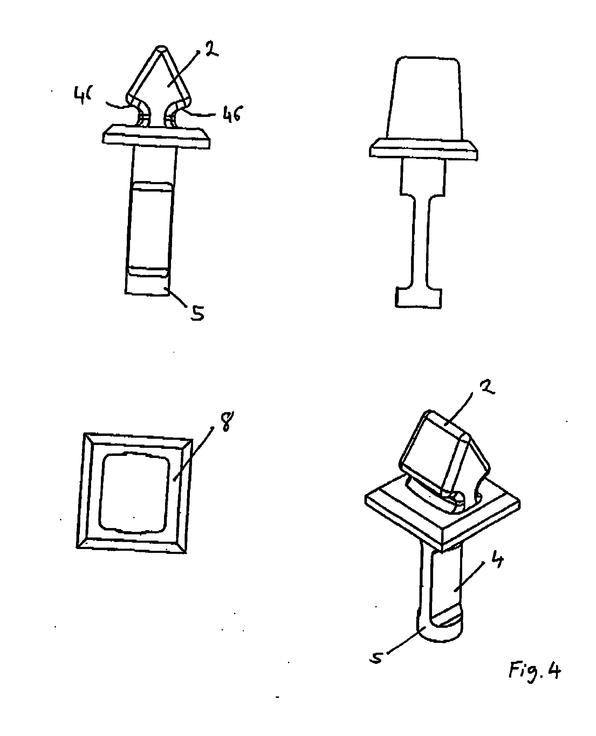

Figur 4 zeigt die Falle gemäß Figur 2. Es ist deutlich zu erkennen, dass die Ecken des Halses der Falle abgerundet sind um eine Drehung der Feder entlang des Halses von dem verriegelten in den gelösten Zustand und umgekehrt zu erleichtern. Die Falle weist auch noch eine Auflagefläche 8 auf, die angegossen oder nachträglich an der Falle montiert sein kann.

Alle Ausführungsformen der Feder und der Falle können aus beliebigen Materialien wie beispielsweise Metall oder Kunststoff hergestellt werden. Vorzugsweise sind die Feder und die Falle jedoch aus Metall hergestellt.

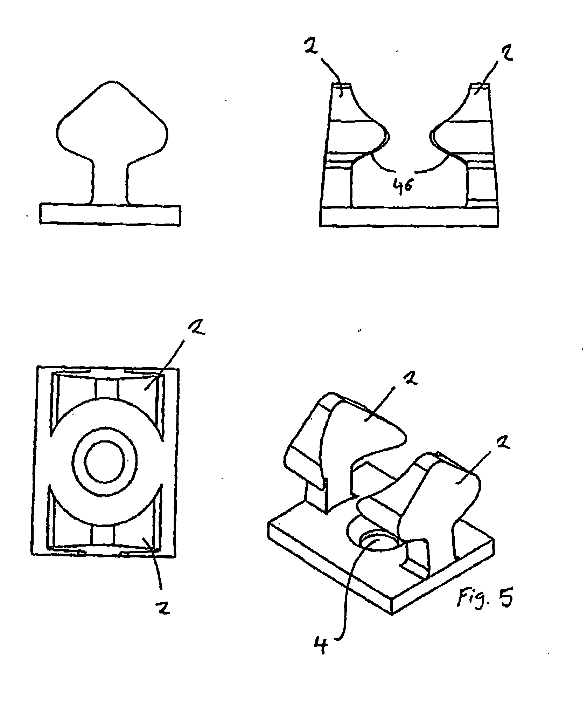

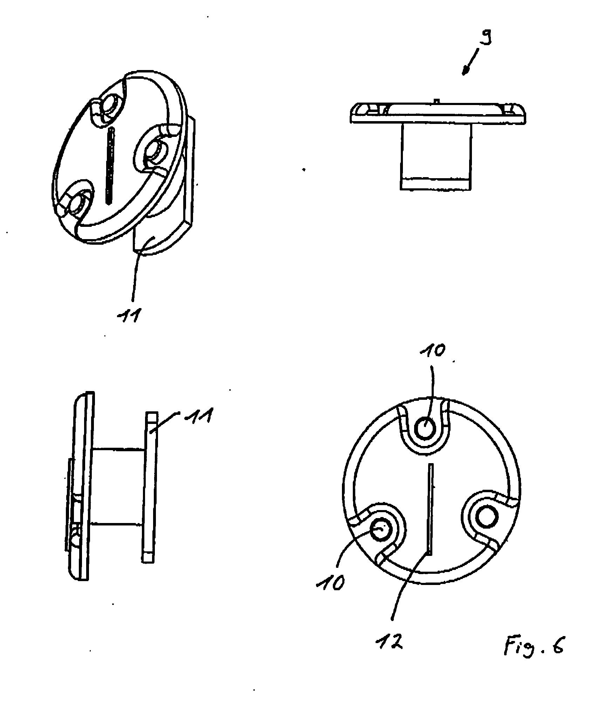

Figur 5 zeigt eine weitere Ausführungsform der Falle 2, die mit dem Loch 4 an einer Rinne oder einer Abdeckung befestigt werden kann. In dem vorliegenden Fall ist die Falle in ihrer Längsachse durch ein Versenk in zwei Teile geteilt, sodass sich, wie später noch zu sehen sein wird, zwischen die beiden Teile der Falle ein Schließteil einführen lässt.

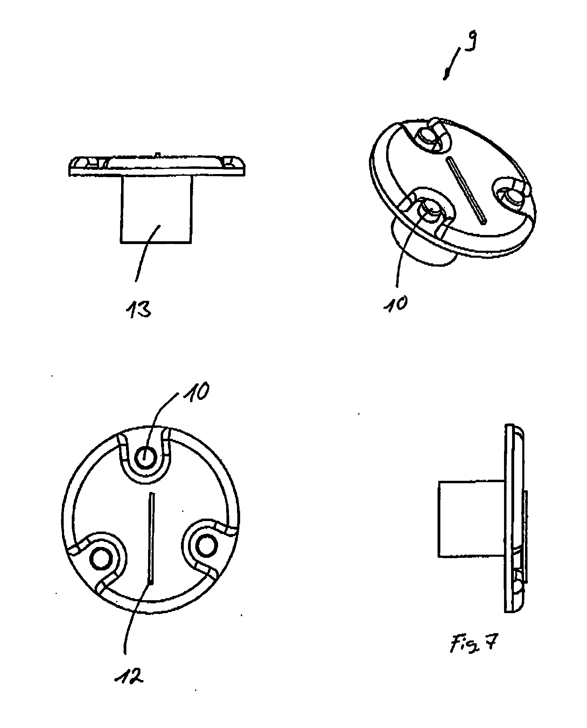

Figur 6 zeigt ein Drehschließteil 9, mit dem die Feder gedreht werden kann. Dieses Drehschließteil 9 weist an seinem unteren Ende ein Bajonett 11 auf, das mit der Feder in Eingriff gebracht wird. An seinem oberen Ende weist das Drehschließteil 9 drei Anlagemittel für ein Spezialwerkzeug auf, dass später beschrieben wird. Des weiteren weist das Drehschließteil 9 an seiner Oberseite ein Anzeigemittel 12 auf, um zu verdeutlichen in welcher Position sich das Bajonett befindet. Das Bajonett in Figur 6 kann auch nur zur Sicherung des Schließteils an einer Abdeckung verwandt werden, worauf später eingegangen wird.

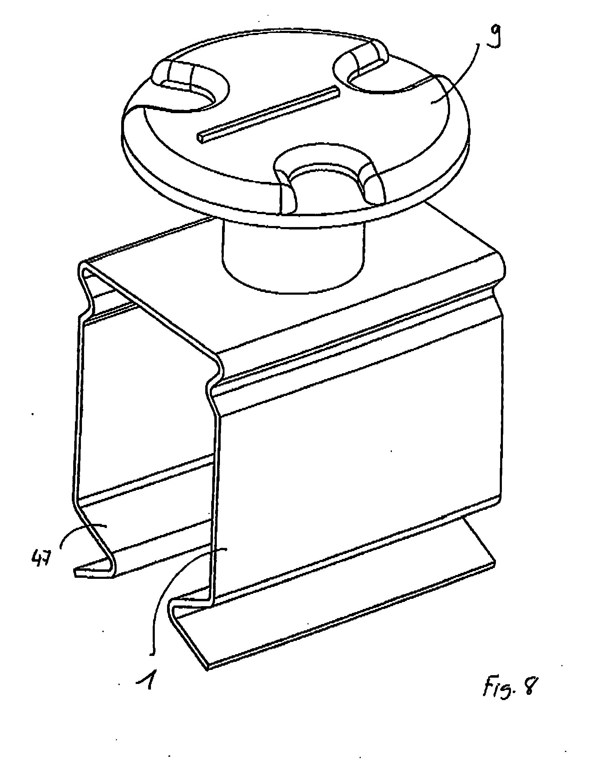

Figur 7 zeigt ein Drehschließteil, das in wesentlichen dem Drehschließteil gemäß Figur 6 entspricht. Dieses Drehschließteil ist jedoch mit der Falle und er Feder in Eingriff bringbar um diese zu drehen.

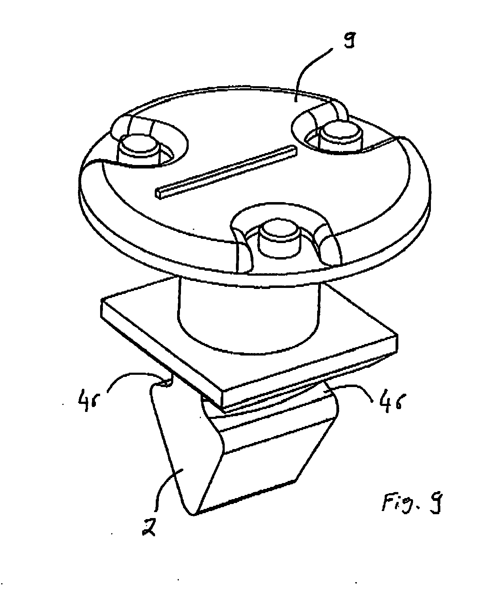

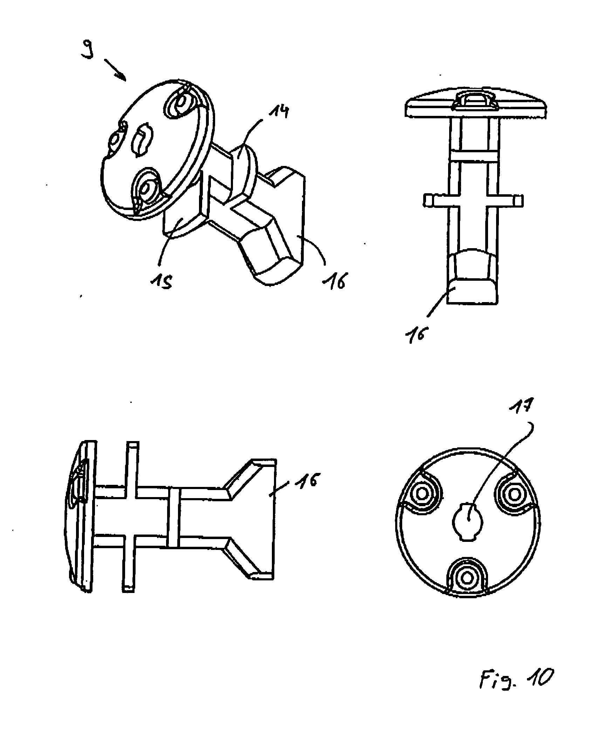

Figur 8 zeigt das Drehschließteil gemäß Figur 7mit montierter Feder 1, bei dem die Aufnahmeversenke für das Spezialwerkzeug vereinfacht; d.h. ohne zusätzliche Stifte ausgeführt ist. Mittels des Drehschließteils wird die Feder mit dem Spezialwerkzeug für die erforderliche Öffnungsbewegung bewegt.

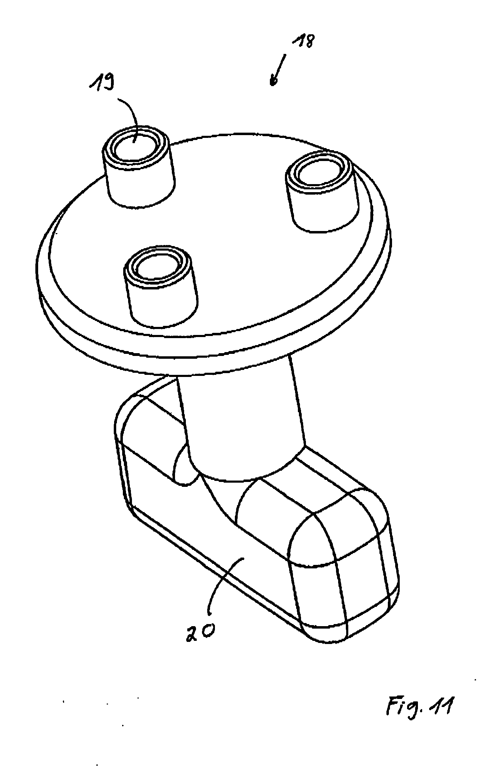

Figur 9 zeigt das Drehschließteil 9, das auf die Falle 2 montiert ist, um diese drehen zu können.

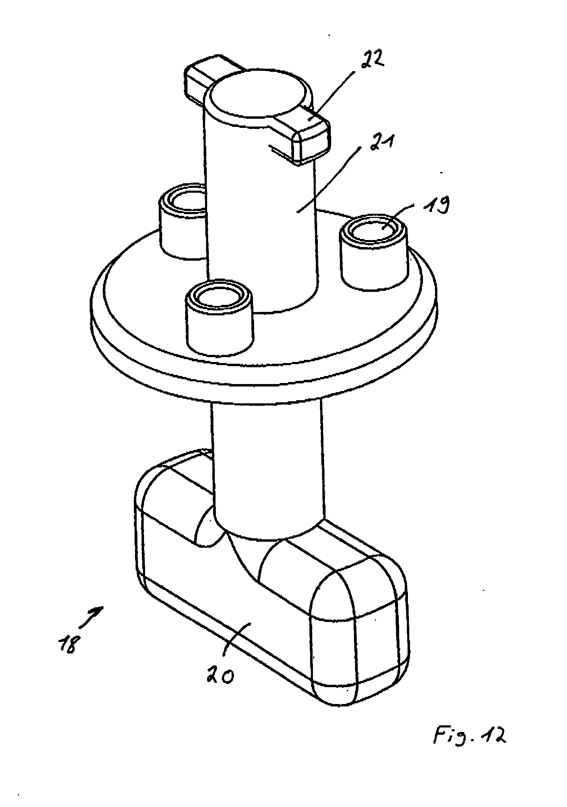

Figur 10 zeigt eine weitere Ausführungsform des Schließteils 9. In dem vorliegenden Fall weist das Schließteil einen verlängerten Schacht auf, an den die Bajonette 14, 15 angeordnet sind und an dessen Ende sich der Schließkeil 16 befindet. Mit dem Schließkeil 16 können die Schenkel der Feder reversibel aufgeweitet werden. Die Bajonette 14, 15 dienen dazu axiale Kräfte auf die Feder zu übertragen bzw. die axiale Bewegung des Schließkeils zu begrenzen. An seinem oberen Ende weist das Drehschließteil eine Öffnung 17 auf, in die ein Werkzeug eingreifen kann, um neben rotatorischen Kräften, die über die Mittel 10 übertragen werden auch axiale Kräfte in das Drehschließteil einleiten zu können. Die Öffnung 17 dient gleichzeitig auch als Anzeigemittel für die Position des Schließkeils 16.

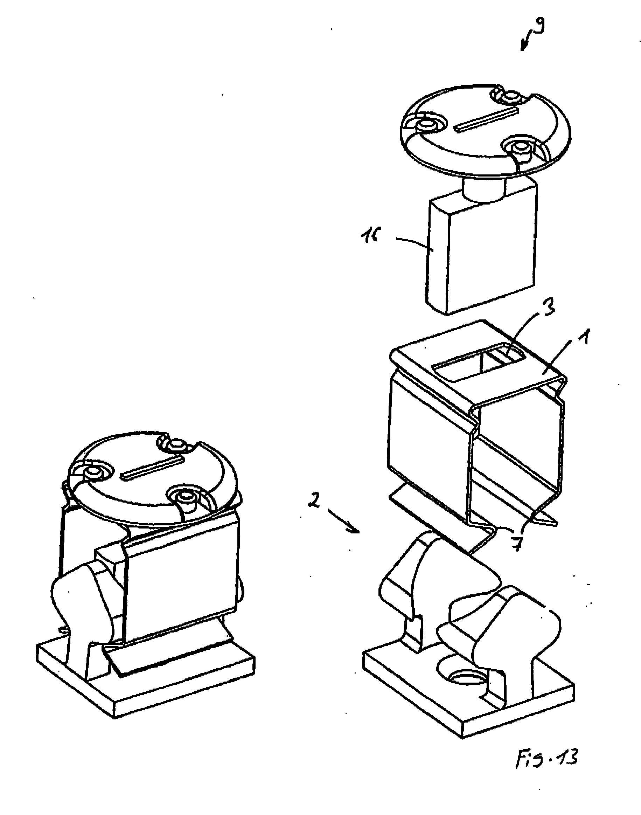

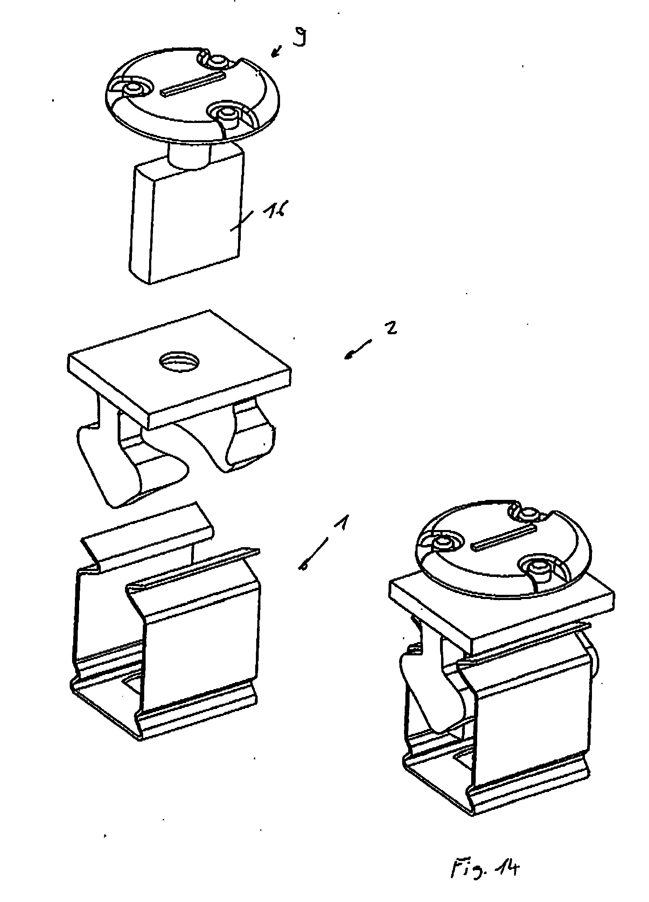

Figur 11 zeigt das Spezialwerkzeug 18 das einen Griff 20 sowie Zylinder 19, die mit den Anlagemitteln 10 beispielsweise des Drehschließteils in Eingriff gebracht werden, aufweist, so dass Drehmomente auf das Drehschließteil aufgebracht werden können. Bei diesem Werkzeug handelt es sich um ein Spezialwerkzeug, dass nur für die vorliegende erfindungsgemäße Verrieglung einsetzbar ist, so dass Vandalismus und Diebstahl im wesentlichen ausgeschlossen werden können.

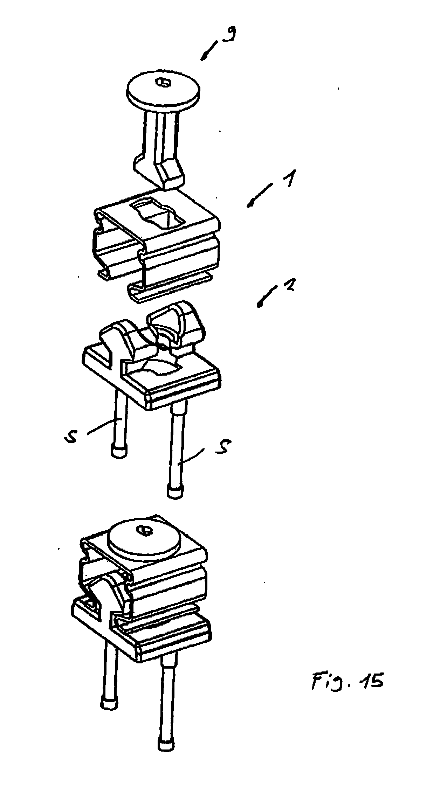

Figur 12 zeigt das Werkzeug gemäß Figur 11, wobei dieses in dem vorliegenden Fall auch eine Zapfen 21 aufweist, an dessen Ende Stifte 22 angeordnet sind. Dieser Zapfen bzw. diese Stifte können in die Öffnung 7 eingebracht werden und dort verhackt werden, sodass auch axiale Kräfte auf das Drehschließteil ausgeübt werden können.

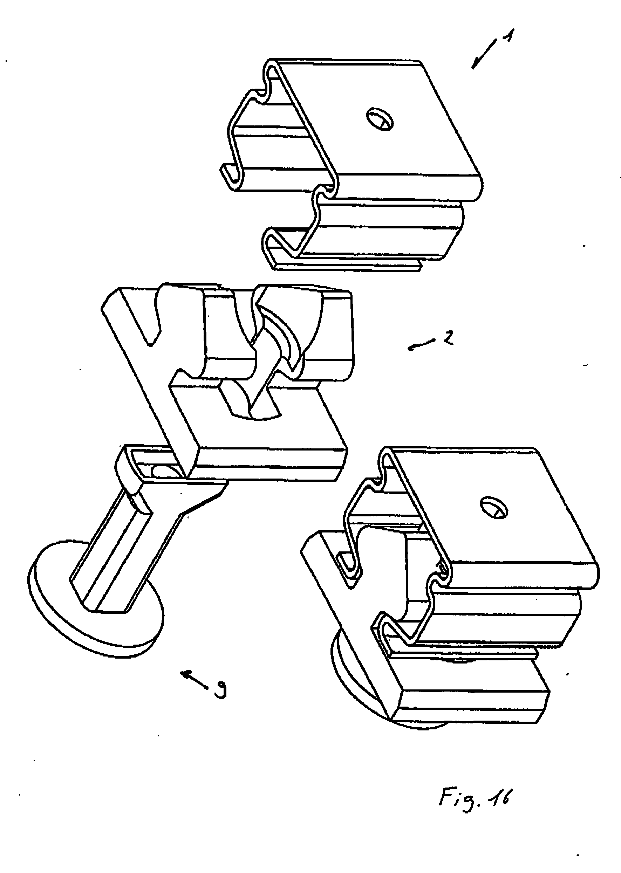

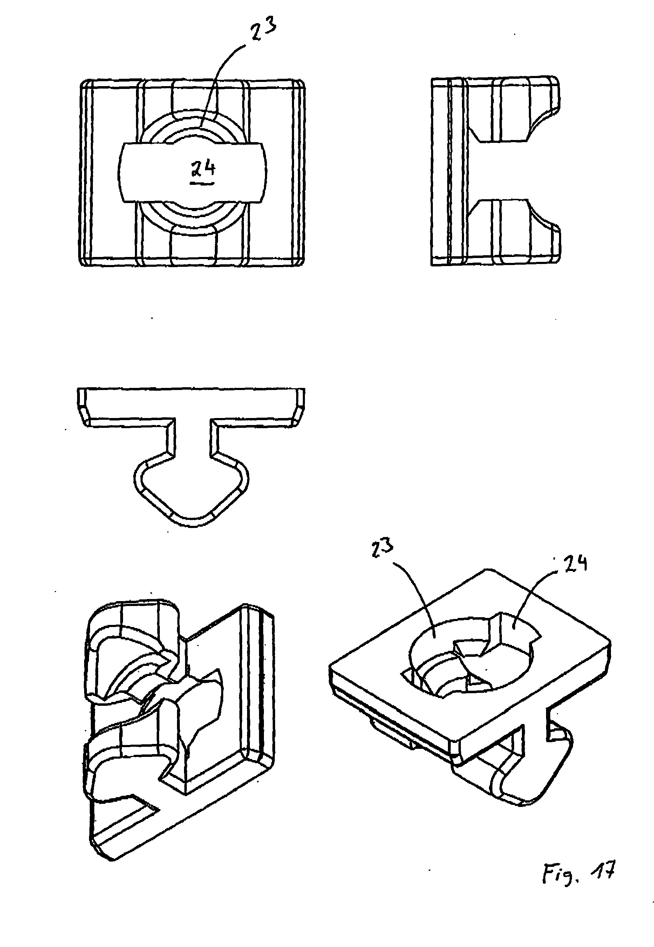

Figuren 13 und 14 zeigen ein Drehschließteil, das ein seinem Drehschließkeil 16 aufweist, der zwischen die beiden Teilen der Falle 2 angeordnet wird. Durch eine Drehung des Drehschließkeils können die Schenkel der Feder soweit gespannt werden, so dass diese nicht mehr mit der Falle 2 in Eingriff sind. Dadurch ist sowohl eine Verrieglung der Feder an der Falle als auch ein Lösen der erfindungsgemäßen Verrieglung möglich.

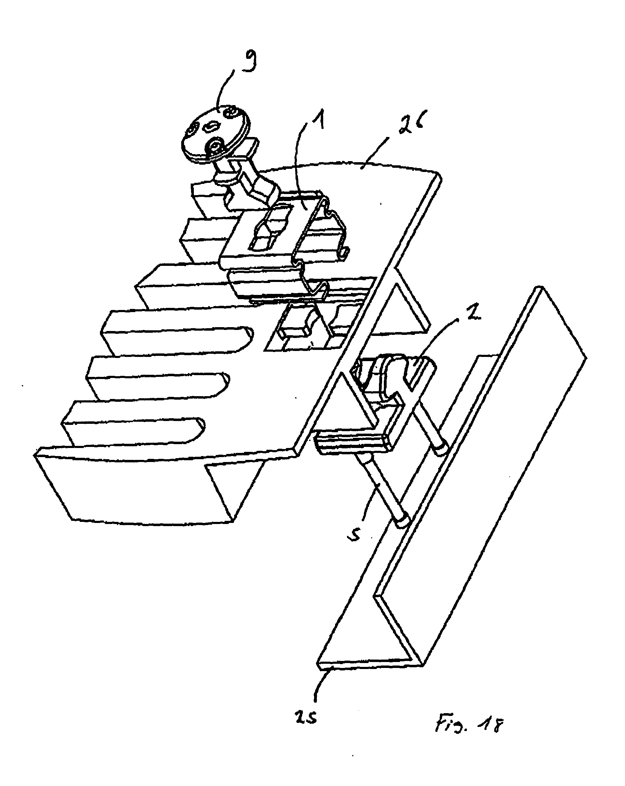

Figur 15 zeigt eine weitere Ausführungsform der erfindungsgemäßen Verrieglung in dem vorliegenden Fall erstreckt sich der Verrieglungskeil jedoch nicht durch die Falle sondern durch die Feder hindurch.

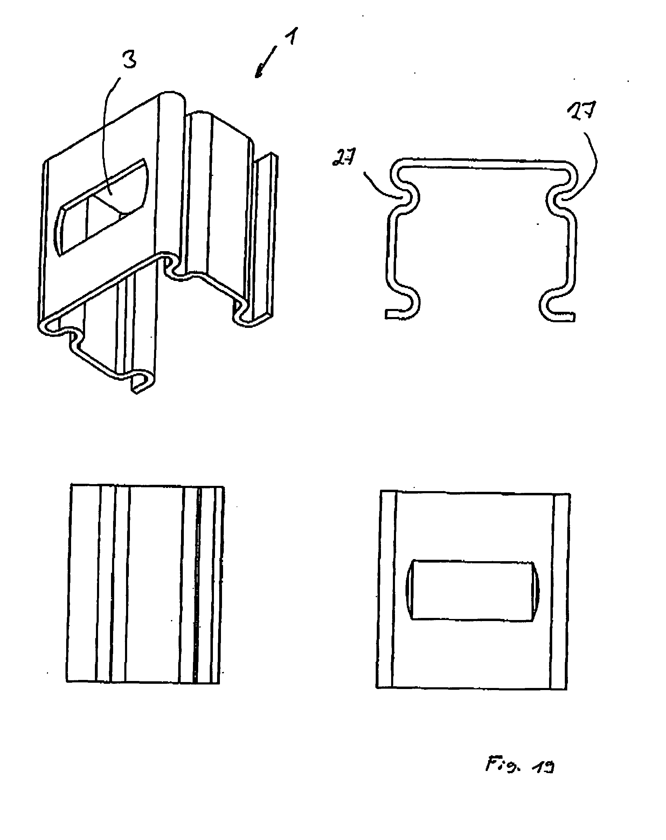

Figur 16 zeigt noch einmal die erfindungsgemäße Verrieglung wobei der Verrieglungskeil in dem vorliegenden Fall durch ein Langloch in der Falle geführt wird.

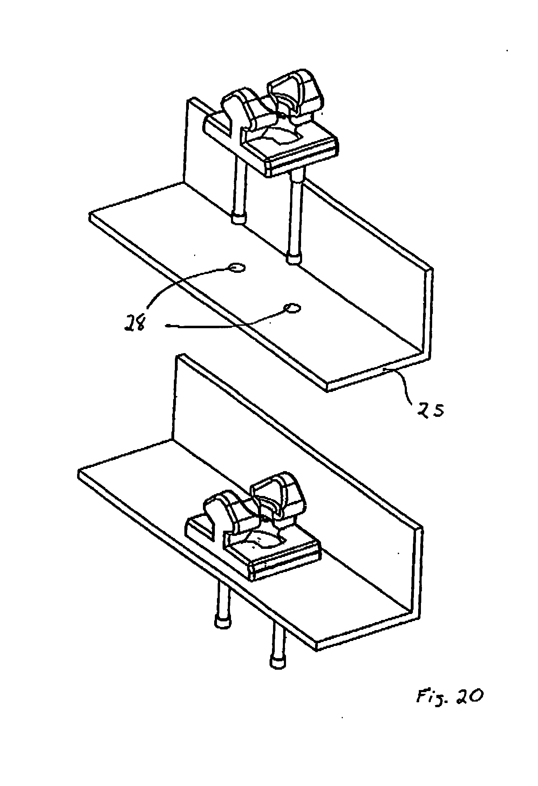

Figur 17 zeigt einen Versenkkonus, in den der Verrieglungskeil zu einer zusätzlichen Sicherung versenkt werden kann. Dafür wird der Verrieglungskeil durch die Öffnung 24 soweit hindurch gesteckt, bis er innerhalb des Versenkkonus 23 drehbar ist. Dann wird er um 90 Grad gedreht und in dem Versenkkonus versenkt.

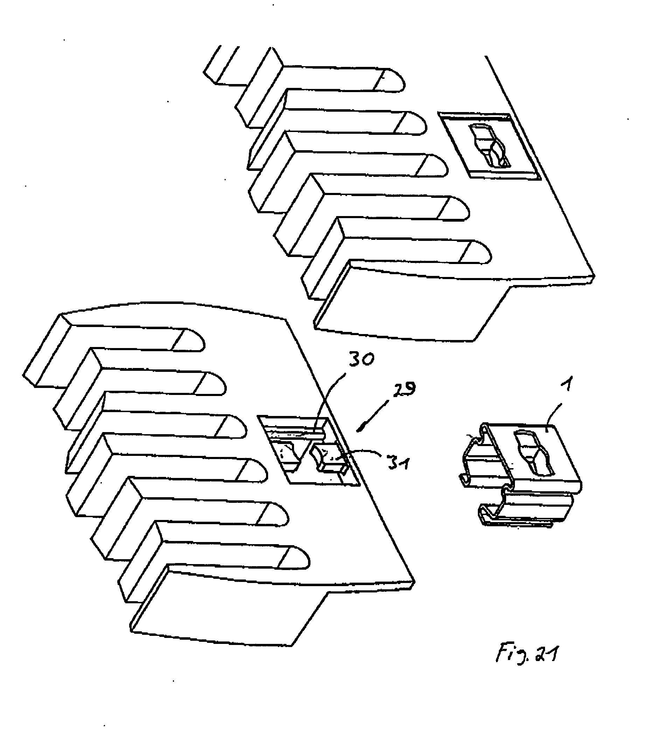

Figur 18 zeigt die erfindungsgemäße Verrieglung, die eine Abdeckung, beispielsweise einen Kanalgussdeckel an dessen Auflage 25 verriegelt. Mittels der Ankerzapfen 5 wird die Falle 2 mit der Auflage 25 fest verbunden. Die Feder 1 ist wie in den folgenden Darstellungen gezeigt, formschlüssig mit dem Deckel 26 verbunden und kann mittels des Drehschließteils 9 mit der Fall 2, wie bereits dargestellt, verriegelt werden.

Figur 19 zeigt die Feder gemäß Figur 18. Diese weist an ihrem oberen Teil Einbuchtungen 27, mit dem sie formschlüssig an der Abdeckung montiert werden kann. Das Langloch 3 dient zur Aufnahme des Schließteils.

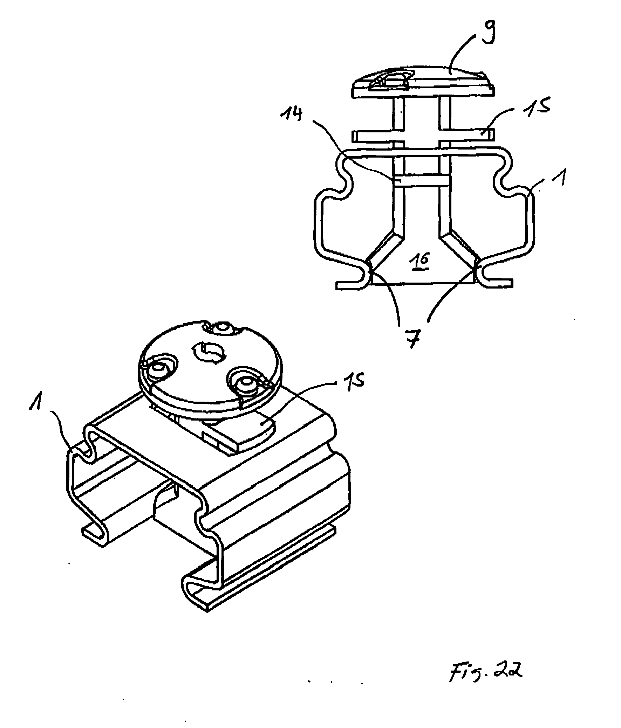

In Figur 20 ist die Verbindung der Falle 2 mit der Auflage 25 dargestellt. Dafür weist die Auflage 25 Bohrungen 28 auf, durch die Ankerzapfen 25 geführt und fest in der Auflage verbunden werden.

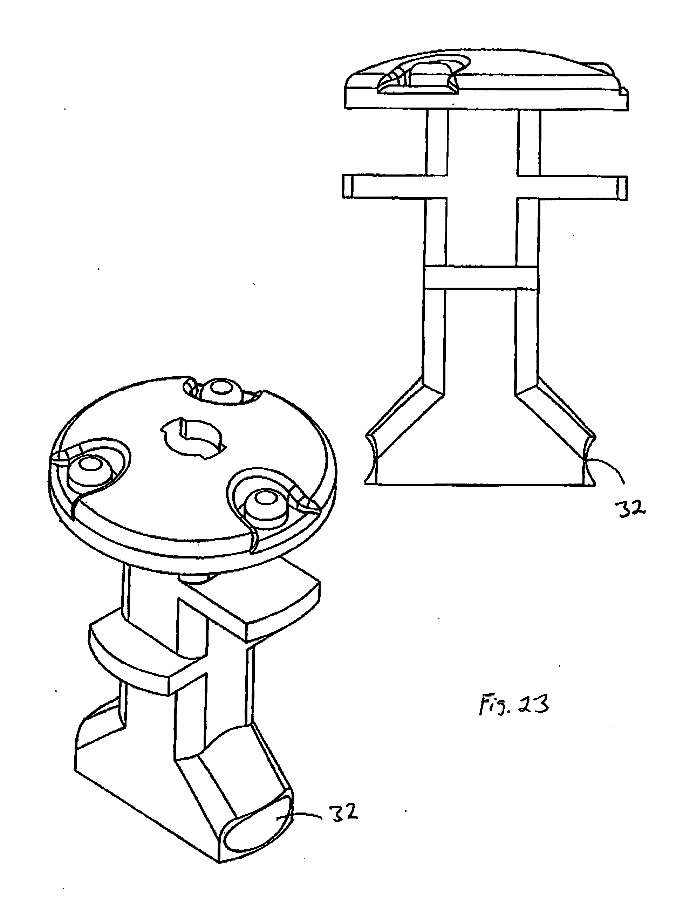

Figur 21 zeigt die formschlüssige Montage der Feder gemäß Figur 19 mit dem Federnfach 29. Dieses weist Vorsprünge 30 auf, die formschlüssig in Eingriff mit den Einbuchtungen 27 der Feder gebracht werden. Des weiteren weist das Federfach Vorsprünge 31 auf, um die Feder in axialer Richtung belasten zu können. Das Federfach umschließt die Feder vollständig, so dass diese von Kraftfahrzeugen und dergleichen nicht beschädigbar ist. Die Feder schließt unterhalb oder bündig mit der Abdeckung ab.

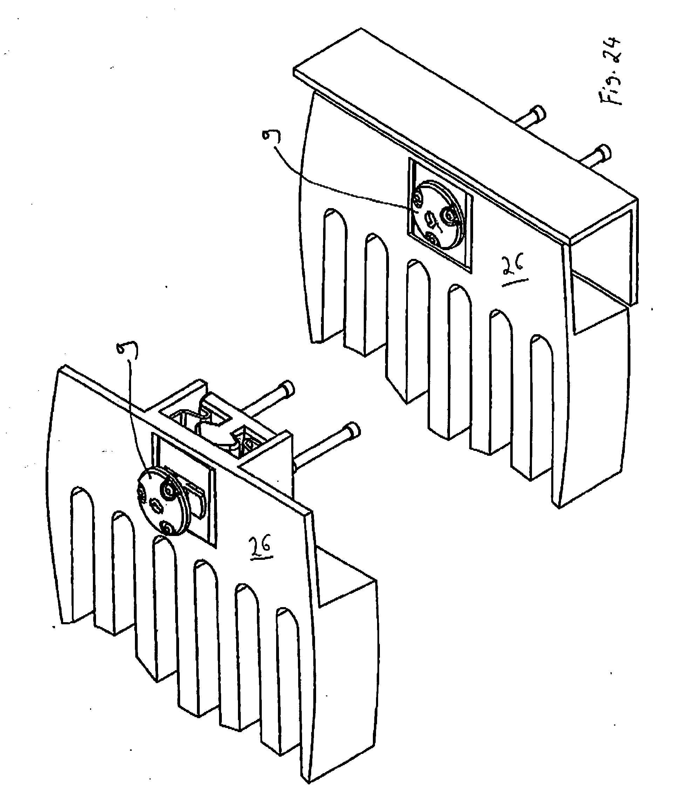

Figur 22 zeigt eine durch den Drehschließkeil 16 eines Drehschließteils 9 vorgespannte Feder. Um zu vermeiden, dass die Feder aus dieser vergleichsweisen labilen Position herausrutscht, hat das Drehschließkeil an seinen beiden äußeren Enden wie in Figur 23 dargestellt Senken, die formschlüssig mit den Rundungen der Anlagefläche 7 der Feder zusammenwirken, so dass der Drehschließkeil in seiner Position fixiert ist.

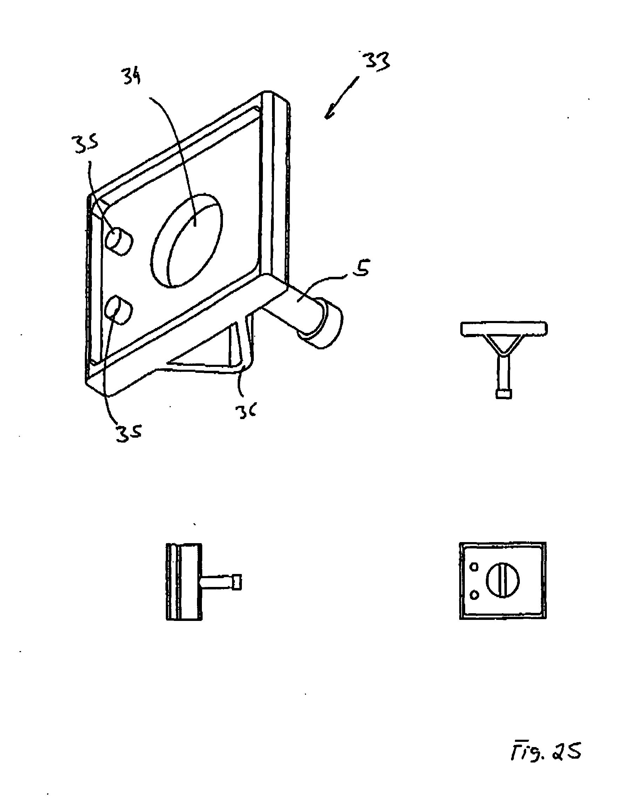

Figur 24 zeigt den an der Auflage 25 fixierten Abdeckung 26, wobei jedoch der obere Teil des Drehschließteils noch aus der Abdeckung 26 heraussteht d. h. die Verrieglung noch nicht stattgefunden hat. Sollte ein Arbeiter das Drehschließteil in dieser Position vergessen haben, hat die erfindungsgemäße Verrieglung den Vorteil, dass sobald ein Fahrzeug über das Drehschließteil fährt oder ein Fußgänger auf das Drehschließteil tritt dieses nach unten verschoben wird und die Verrieglung form- und/oder kraftschlüssig mit der Falle in Eingriff gerät, so dass die erfindungsgemäße Verrieglung selbstsichernd ist.

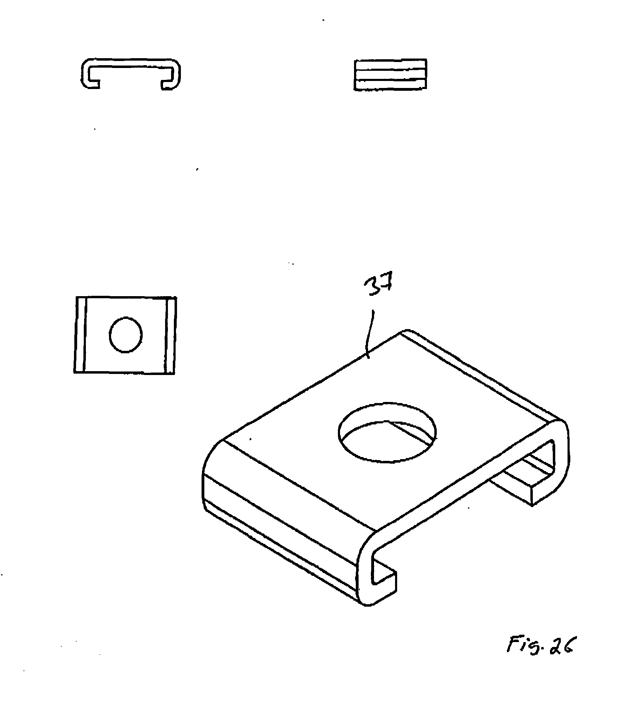

Figur 25 zeigt den Schloßkasten 33 einer weiteren Ausführungsform der erfindungsgemäßen Verrieglung. Diese weist innerhalb des Schloßkastens die Nocken 35 auf, um daran, wie später dargestellt, eine Feder zu lagern. Des weiteren weist der Schloßkasten 33 eine Öffnung 34 auf, durch die der Verrieglungsbolzen geführt wird, sowie ein Ankerzapfen 5 und eine Ablaufrinne für Schmutz auf.

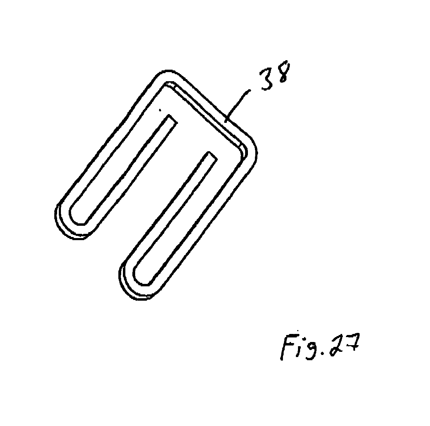

Figur 26 zeigt den Deckel 37 des Schloßkastens 33 der ebenfalls eine Bohrung aufweist.

Figur 27 zeigt die Feder 38, die an den Nocken 35 befestigt wird. Die Feder weist an jeder Seite zwei Schenkel auf, durch welche ein ausreichender Federweg und dimensionierbare Federkraft erzeugt werden können (doppelt wirkender Federmechanismus beider Schenkel).

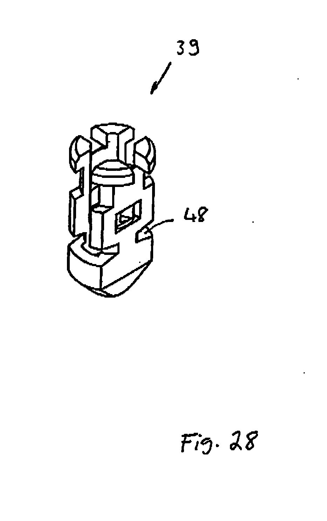

Figur 28 zeigt den Verriegelungsbolzen 39 als Verschlussnocken, der an seiner Vorder- und Rückseite abgeflacht ist und der die Rille 48 aufweist, die mit den Schenkeln der Feder in Eingriff gebracht wird, um eine form- und/oder kraftschlüssige sowie selbsthemmende Verbindung zu erzeugen.

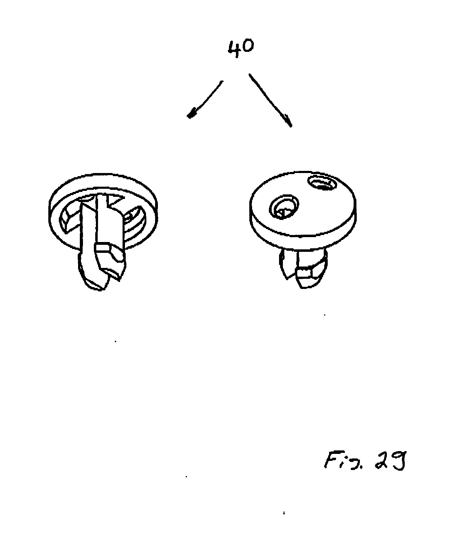

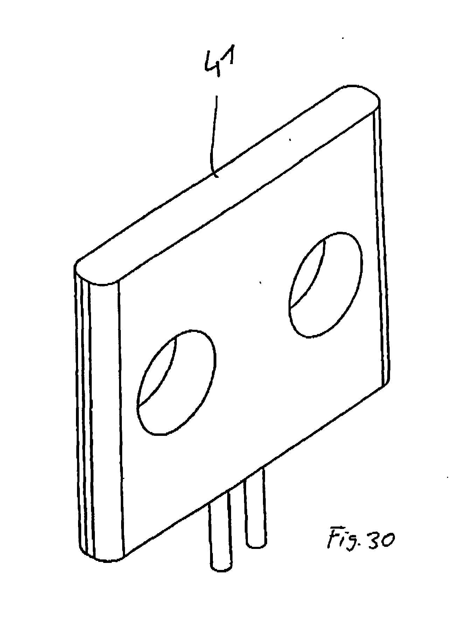

Figur 29 zeigt das Schließteil 40, mit speziellem Werkzeugversenken für den Stiftschlüssel nach Figur 30, welches formaschlüssig auf den Verriegelungsbolzen montiert wird. Mit diesem Schlüssel kann ein Drehmoment auf das Schließteil 40 ausgeübt werden, dass dieses Drehmoment auf den Verrieglungsbolzen 39 zur Ver und Entrieglung überträgt.

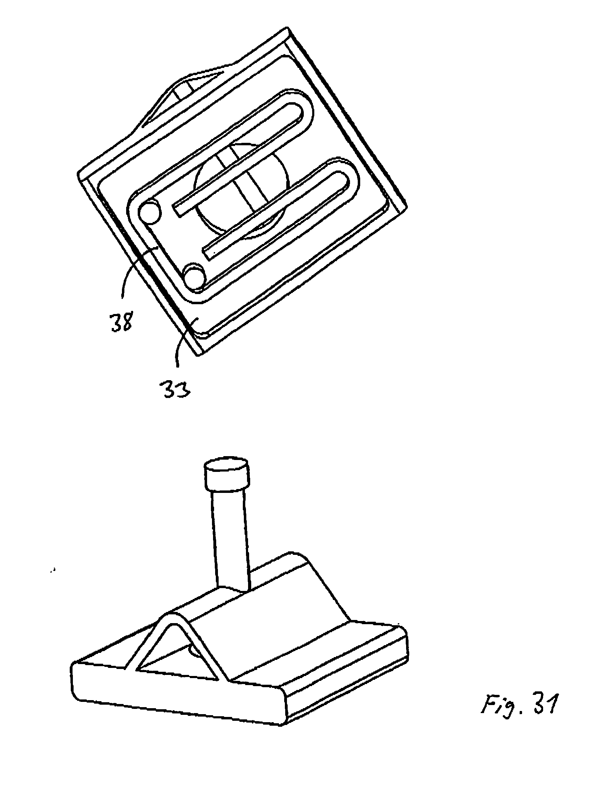

Figur 31 zeigt die in dem Schloßkasten 33 an den Nocken 35 montierte Feder.

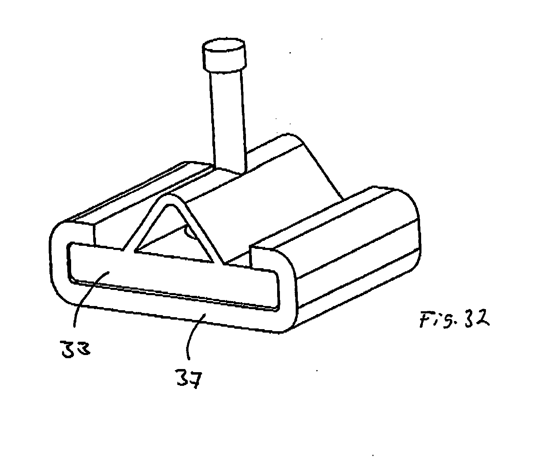

Figur 32 zeigt den von dem Deckel 37 abgedeckten Schloßkasten 33.

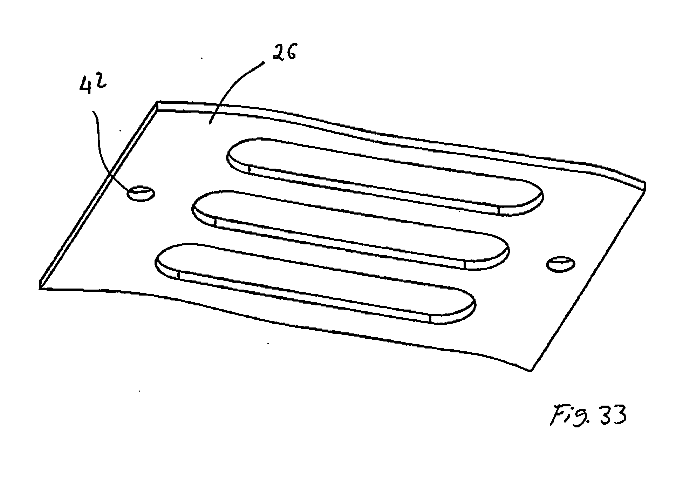

Figur 33 zeigt eine Abdeckung 26, der Öffnungen 42 aufweist, auf die der Verrieglungsbolzen 39, montiert und mit ihm an der Abdeckung formschlüssig befestigt wird. Nachdem die Verrieglungsbolzen in die Löcher 42 eingesetzt wurden, wird das Schließteil 42 oben in die Verrieglungsbolzen 40 gesteckt.

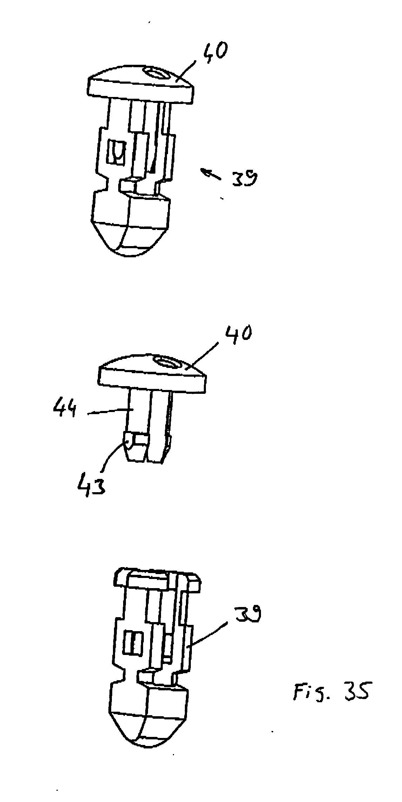

Dieser Vorgang ist in Figur 35 dargestellt. Die Schenkel 44 an dem Schließteil 40 biegen die Schenkel des Verrieglungsbolzens auseinander und verbinden diese mit dem Deckel. Um zu vermeiden, dass das Schleißteil 40 wieder aus dem Verrieglungsbolzen heraus gedrückt wird, weist dieser am Ende der beiden Schenkel 44 Klemmnocken 43 auf, die mit entsprechenden Einbuchtungen in dem Verrieglungsbolzen zusammenwirken.

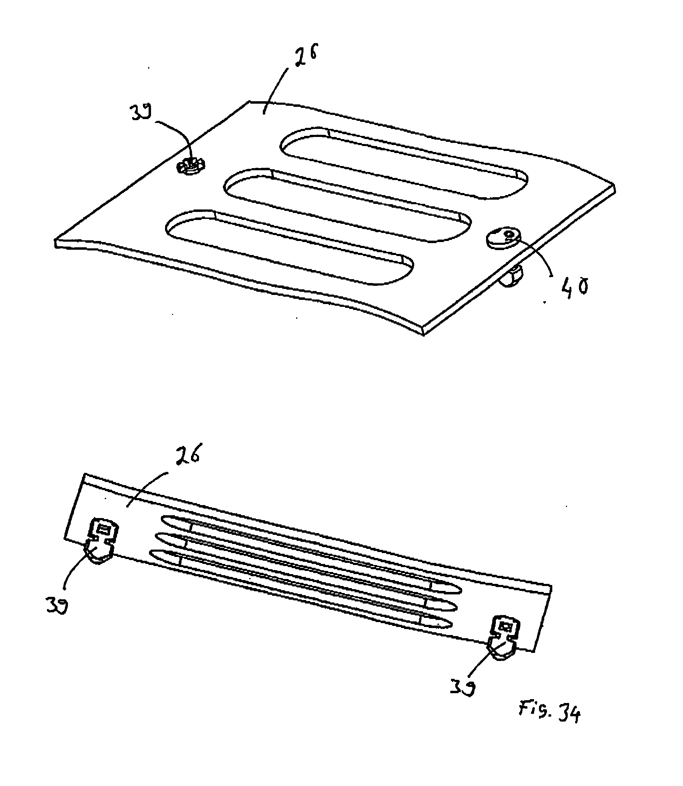

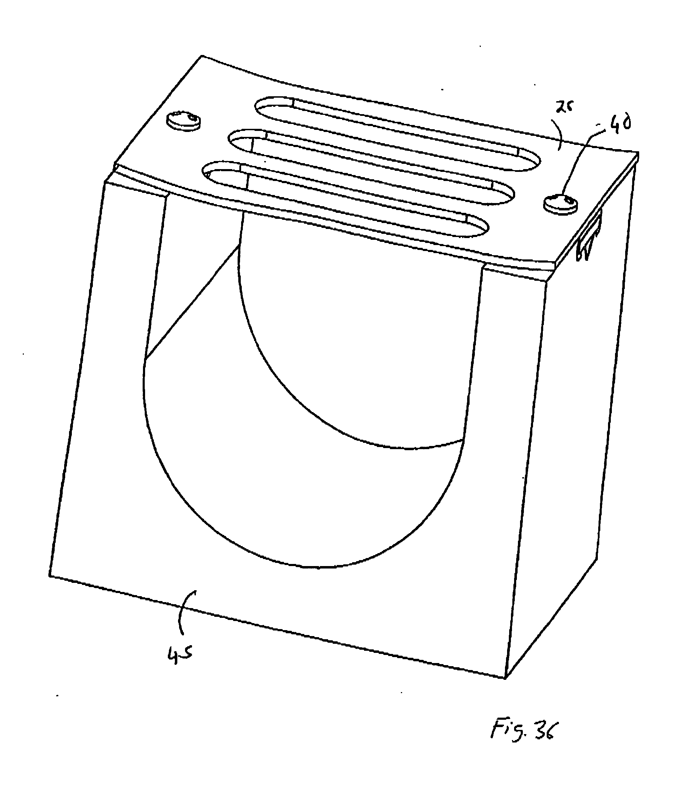

Figur 36 zeigt eine Abdeckung, die mit der Verrieglung gemäß den Figuren 25 bis 35 an einer Rinne 45 verbunden wurde.

### Bezugszeichenliste

- 1: Feder
- 2: Falle
- 3: Öffnung
- 4: Befestigungsmittel
- 5: Ankerzapfen
- 6: Einbuchtung
- 7: Anlageflächen
- 8: Auflageflächen
- 9: Drehschließteil
- 10: Anlagemittel für ein Werkzeug
- 11: Bajonett
- 12: Anzeigemittel
- 13: Fügezapfen
- 14,15: Bajonett
- 16: Schließteil, Schließmittel, Schließkeil
- 17: Öffnung
- 18: Werkzeug
- 19: Zylinder
- 20: Griff
- 21: Zapfen
- 22: Stift
- 23: Versenkkonus
- 24: Öffnung
- 25: Auflage, Auflageteil
- 26: Abdeckung, Abdeckteil
- 27: Einbuchtung
- 28: Bohrung
- 29: Federfach
- 30: Vorsprung
- 31: Auflage
- 32: Senken
- 33: Schloßkosten
- 34: Öffnung
- 35: Nocken
- 36: Ablaufrinne
- 37: Deckel
- 38: Feder
- 39: Venieglungsbolzen
- 40: Schließteil
- 41: Schlüssel
- 42: Bohrung
- 43: Klemmnocke
- 44: Dehnschenkel
- 45: Rinne
- 46: schräge Fläche
- 47: schräge Fläche
- 48: Rille

## Patentansprüche

1. Verriegelung zwischen einem Abdeckteil (26) und einem Auflageteil (27), **dadurch gekennzeichnet, dass** an dem einem Teil (26, 27) eine Feder (1) und dem anderen Teil (26, 27) eine Falle (2) angeordnet ist die selbsthemmend, form- und/oder kraftschlüssig mit einander verbunden sind.

2. Verriegelung nach Anspruch 1, **dadurch gekennzeichnet, dass** die Verbindung zwischen Feder (1) und Falle (2) eine Schnappverbindung ist.

3. Verriegelung nach einem der voranstehenden Ansprüche, **dadurch gekennzeichnet, dass** sie mit einem Spezialwerkzeug (18) lösbar ist.

4. Verriegelung nach Anspruch 3, **dadurch gekennzeichnet, dass** die Verbindung durch eine longitudinal und/oder Drehbewegung der Falle (2) oder der Feder (1) lösbar ist.

5. Verriegelung nach einem der voranstehenden Ansprüche, **dadurch gekennzeichnet, dass** die Form der Falle (2) eine Drehbewegung begünstigt.

6. Verriegelung nach Anspruch 3, **dadurch gekennzeichnet, dass** die Feder durch ein Schließmittel (16), vorzugsweise einen Schließkeil, so spannbar ist, dass die Verbindung schließbar und lösbar ist.

7. Verriegelung nach einem der voranstehenden Ansprüche, **dadurch gekennzeichnet, dass** sie mit einem Drehschließteil (9) betätigbar ist

8. Verriegelung nach Anspruch 7, **dadurch gekennzeichnet, dass** das Drehschließteil (9) das Schließmittel aufweist.

9. Verriegelung nach einem der voranstehenden Ansprüche, **dadurch gekennzeichnet, dass** das Drehschließteil (9) ein Bajonett (14, 15) aufweist.

10. Verriegelung nach einem der Ansprüche 7 - 9, **dadurch gekennzeichnet, dass** das Drehschließteil (9) mit dem Spezialwerkzeug (18) betätigbar ist.

11. Verriegelung nach einem der voranstehenden Ansprüche, **dadurch gekennzeichnet, dass** die Falle (2) mindestens eine schräge Fläche (46) aufweist, die im Schließzustand an mindestens einer schrägen Flächen (47) der Feder teilweise anliegt.

12. Verriegelung nach Anspruch 11, **dadurch gekennzeichnet, dass** die schrägen Flächen (46, 47) unterschiedliche Steigungen aufweisen.

13. Verriegelung nach einem der voranstehenden Ansprüche, **dadurch gekennzeichnet, dass** sie einen Spielausgleich aufweist.

14. Verriegelung nach einem der voranstehenden Ansprüche, **dadurch gekennzeichnet, dass** die Falle (2) Ankerzapfen (5) aufweist.

15. Verriegelung nach einem der voranstehen Ansprüche, **dadurch gekennzeichnet, dass** der Schießkeil (16) in einem Versenkkonus (23) sicherbar ist.
